# EUROPEAN PATENT SPECIFICATION

(11) **EP 2 026 513 B1**
(45) Date of publication and mention of the grant of the patent: **03.08.2011**
(21) Application number: 07117549.1
(22) Date of filing: 28.09.2007
(51) Int. Cl.: H04L 12/56

(54) **Apparatus, and associated method, for facilitating an emergency call session using a packet-switched-capable wireless device**
Vorrichtung und Verfahren zur Unterstützung einer Notruf-Session unter Verwendung eines zur Packetvermittlung geeigneten drahtlosen Geräts
Appareil et méthode associée pour faciliter une session d'appel d'urgence utilisant un dispositif sans fil de commuation de paquets

(30) Priority: 13.08.2007 US 838041
(43) Date of publication of application: 18.02.2009
(73) Proprietor: RESEARCH IN MOTION LIMITED, Waterloo, Ontario N2L 3W8 (CA)
(72) Inventor: Buckley, Adrian, Tracy, CA 95376 (US); Allen, Andrew, Mundelein, Illinois 60060 (US); Bakker, Jan John-Luc, Keller, Texas 76248 (US)
(74) Representative: Roberts, Gwilym Vaughan

(56) References cited:
- WO-A-01/47316
- WO-A-2007/016695
- US-A1- 2004 066 756
- US-A1- 2006 114 871
- HEPWORTH E ET AL: "TGu Proposal for E911 support" IEEE P802.11 WIRELESS LANS, XX, XX, no. 80211-6/280R0, 17 February 2006 (2006-02-17), pages 1-12, XP002418840

## Description

The present invention relates generally to a manner by which to facilitate placement of a call to a PSAP (Public Service Access Point) using a packet-switched-capable wireless device. More particularly, the invention relates to apparatus, and an associated method, that provides information permitting a packet-switched-capable wireless device to place an emergency call to an appropriate PSAP when the wireless device is positioned beyond its home area.

The information provided to the wireless device indicates a network, or domain-type, that the wireless device should access pursuant to the call connection, as well as any other action needed to be taken by the wireless device to facilitate the call session or connection. The information is, for instance, retrieved from a network data base, and its access is made in response to available Radio Access Type (RAT) information determined by the wireless device.

### Background of the Invention

Recent decades have witnessed the development and deployment of many types of radio communication systems that provide for the communication of data to perform many varied types of communication services. Cellular communication systems are exemplary of radio communication systems whose infrastructures have been widely deployed and whose access is made available to many through which to communicate. Typically, a user subscribes to service in a cellular communication system with an operator of a cellular communication system network. The subscription is made with a particular operator, typically an operator that operates a network within a geographical area in which the user of the mobile station shall most regularly be used. Conventional cellular system networks are typically maintained in communication connectivity with wireline, telephonic networks, i.e., PSTNs (Public Switched Telephonic Networks). A user of the mobile station is typically also able to communicate with the mobile station when positioned beyond the coverage area of its home network due to roaming, and other, agreements between operators of different ones of the cellular system networks. The home cellular system network associated with a mobile station is sometimes referred to as an HPLMN (Home Public Land Mobile Network), and a different cellular system network with which the mobile station otherwise communicates, such as when it is positioned in an area encompassed by a cellular system network other than the HPLMN is sometimes referred to as a VPLMN (Visited Public Land Mobile Network).

Other radio communication systems, which exhibit some of the characteristics of cellular communication systems, have also been deployed. Wireless Local Area Networks, WiFi network, as well as others, have also been widely deployed and utilized. Interoperablility is sometimes also provided between such other networks and PLMNs and PSTNs. And, mobile stations are sometimes constructed to permit their operation to communicate by way of a cellular system network and also other types of radio communication systems such as the WLANs and WiFi networks. While early-generation cellular system networks provided only for circuit-switched connections, newer-generation cellular system networks and WLANs and WiFi networks typically provide for packet-switched connections and services. A multi-mode, mobile station might well be positioned at a location permitting of its communication with more than one network including, e.g., more than one WLAN or other packet-switched network. While the ability to communicate with any of several networks is generally advantageous, a problem sometimes results when the mobile station is used to make an emergency call connection with a PSAP (Public Safety Access Point). When the mobile station is positioned in its home area, i.e., in an area encompassed by the HPLMN, a packet-switched call connection session is routed to the PSAP associated with the home network. However, when the mobile station is positioned beyond its home area, the packet-switched, emergency call connection session is also routed to the PSAP associated with the HPLMN of the mobile station. A PSAP located within closer vicinity of the mobile station would, of course, be more likely better to be able to respond to the emergency request of the emergency call connection.

Additionally, there is a possibility that the mobile station used to make the emergency request does not recognize that the call connection session is an emergency request. In such a situation, the network must further be aware that the call, i.e., the dialed number, is an emergency number and to provide instructions to the mobile station to re-perform the operations associated with the emergency call connection session request.
[0005a] US 2006114871 discloses a scheme for effectuating generic access network (GAN) selection with respect to a user equipment (UE) device that is operable in wide area cellular network ((WACN) bands as well as in wireless access network bands (e.g., GAN bands and/or UMA bands). A network node (e.g., a GAN controller (GANC) or UMA network controller (UNC)) is equipped with logic for resolving service requirements as well as network information gathered by the UE device. Based thereon, an appropriate list of UNCs/GANCs is provided to the UE device for selection, the UNCs/GANCs being operable with one more wide area cellular networks identified for the UE device.
[0005b] WO 2007/016695 discloses techniques to support emergency voice-over-Internet Protocol (VoIP) calls. The techniques may be used for various 3GPP and 3GPP2 networks, various location architectures, and various types of User Equipment (UE). A UE communicates with a visited network to send a request to establish an emergency VoIP call. The UE interacts with a location server instructed by the visited network to obtain a first position estimate for the UE. The UE performs call setup via the visited network to establish the emergency VoIP call with a PSAP, which may be selected based on the first position estimate. The UE may thereafter perform positioning with the location server to obtain an updated position estimate for the UE, e.g., if requested by the PSAP.
[0005c] US 2004066756 discloses a method for user equipment (UE) resident in a wireless access network (WLAN) to obtain access to at least one other network. The method includes storing the identification (SSID) of the at least one other network (visited PLMNs 1-3 and home PLMNs 4 and 5) in the user equipment; transmitting from the user equipment a request for connection to one of the at least one other network, which includes an identification of at least one of the at least one other network, to the wireless access network; and in response to the wireless access network receiving the identification, the user equipment is connected to the identified at least one other network through the wireless access network.
[0005d] The paper by Hepworth et al: "TGu Proposal for E911 support" IEEE P802.11 WIRELESS LANDS, XX, XX, no. 80211-6/280R0, 17 February 2006 (2006-02-17), pages 1-12, CP002418840 considers the security challenges in that an unauthenticated user should not be able to interfere with broadcast traffic of other users, but does need to have broadcast support. The solution presented by this paper is for the emergency service to be presented on a separate virtual AP. The means that the emergency user broadcast traffic is separated from that of normal users (and the authenticated user does not need a group key).

An improved procedure by which to provide for an emergency call connection by a packet-switched-capable mobile station is therefore required.

It is in light of this background information related to packet-switched-capable wireless devices that the significant improvements of the present invention have evolved.
[0007a] The invention is defined in the independent claims. Some optional features of the invention are defined in the dependent claims.

### Brief Description of the Drawings

Figure 1 illustrates a functional block diagram of a radio communication system in which an embodiment of the present invention is operable.

Figure 2 illustrates a representation of an exemplary network data base of an embodiment of the present invention, used pursuant to an embodiment of the present invention.

Figure 3 illustrates a message sequence diagram representative of the signaling generated pursuant to operation of an embodiment of the present invention.

Figure 4 illustrates another message sequence diagram, also representative of signaling generated pursuant to operation of an embodiment of the present invention.

Figure 5 illustrates a table representative of an exemplary XML schema utilized pursuant to an embodiment of the present invention.

Figure 6 illustrates another table, similar to that shown in Figure 4, but representative of other exemplary XML schema utilized pursuant to an embodiment of the present invention.

Figure 7 illustrates a method flow diagram representative of the method of operation of an embodiment of the present invention.

### Detailed Description

The present invention, accordingly, advantageously provides apparatus, and an associated method, by which to facilitate placement of a call to a Public Safety Access Point (PSAP) using a packet-switched-capable wireless device.

Through operation of an embodiment of the present invention, information is provided that permits a packet-switched-capable, wireless device to place an emergency call to an appropriate PSAP when the wireless device is positioned beyond its home area.

The information is sent to the wireless device and indicates to the wireless device the network or domain-type that the wireless device should access pursuant to the call connection. Additional information related to other action needed to be taken by the wireless device to facilitate the call, or its operation, is also provided. The information is, for instance, retrieved from a network data base responsive to position-related information of the wireless device provided by the wireless device.

In one aspect of the present invention, the wireless device forms a multi-mode, mobile station, also referred to herein as a UE (User Equipment). The mobile station performs an investigation to determine the availability of Radio Access Types (RATs) that are available through which to communicate at a location at which the mobile station is positioned. The mobile station, e.g., scans all of the frequency bands at which the mobile station operates to detect signals broadcast by corresponding networks or a sub-set of those frequencies. That is to say, the mobile station performs a wide band scan. If, e.g., the multi-mode, mobile station is operable at the GRAN (Generic Radio Access Network) bands of 700, 850, 900, 1800, 1900, 2100, etc. MHz bands, the UTRAN (Universal Terrestrial Access Radio Network) bands of 700, 850, 900, 1800, 1900, 2100, etc. MHz frequency bands, the 802.11a, 802.11b, 802.11g, 802.11n, Wi-max etc. bands, the mobile station scans the corresponding frequency bands to detect network signals broadcast by corresponding network devices. If implemented, parallel scanning also provides for reduced scanning times. Network availability is also determinable, for instance, by retrieval of such information by way of a hardwired, IP (Internet Protocol) or other, connection. Once an investigation of the RATs has been performed any associated network related information retrieved from broadcast channels e.g. System Information messages shall be stored in the wireless device. Such information could be but not limited to CGI, SSID,

The information, once collected, is configured into a message, such as an SIP (Session Interface Protocol) invite message that is then communicated by the mobile station by way of a packet-switched connection. The message alternately is of another type, e.g., a USSD message, or any other appropriate message. The message is sent by the mobile station, routed through the access network to which the message is sent, and then on to the HPLMN of the mobile station.

In another aspect of the present invention, the information about available RATs is configured into a P-access-network-info header, an information element insertable into an SIP invite message. The information forms a list that includes one or more entries. And, the SIP invite message is sent by the SIP UA (User Agent) of the mobile station, sent by way of a radio air interface to a radio access network and then forwarded on to a home network associated with the mobile station.

In another aspect of the present invention, a network node is positioned to receive and detect a session initiation request sent by the mobile station, e.g., the SIP UA. Depending upon the contents of the request, the network node determines whether the SIP UA of the mobile station is aware of available RATs when the request was sent. If the message includes a list of available access types, the network node utilizes the included information in a determination of the radio access type that the mobile station should use pursuant to its request. The determination is made, e.g., through access to a data base that includes information associated with the location at which the mobile station is positioned together with the capabilities of the mobile station. If the mobile station should utilize, instead, a different radio access type, then, the network node includes instructions that instruct the mobile station to utilize a different network, or domain-type, pursuant to subsequent signaling and call connection. A SIP 380 message, generated in response to the SIP invite message includes the alternate instructions.

In another aspect of the present invention, the mobile station receives and detects the SIP 380, or other, message returned to the mobile station in response to the earlier-sent message by the mobile station. The information contained in the returned message, if including instructions to utilize a different access type for further communications, the mobile station takes action to conform to the instructions. Instructions are given, e.g., for the SIP UA of the mobile station to choose an alternative domain, such as a circuit-switched domain, or to choose a packet-switched domain, to provide a list of access types available to the SIP UA, if not already provided to the network. The access type then selected by the SIP UA is used to make an emergency call, perform a session continuity, or to perform voice continuity, or other appropriate operation.

By providing instructions from the network to the mobile station as to what access type to route a request for an emergency connection, the request is caused to be routed to an appropriate PSAP.

In these and other aspects, therefore, apparatus, and an associated method is provided for a packet-capable wireless device to facilitate an emergency service. A collector is configured to collect available access type information of available network access types available to the wireless device. A reporter is configured to generate an available access type report that includes the available access type information collected by the collector. A detector is configured to detect a response to the available access type report. The response identifies to the wireless device an emergency service access type by which to communicate pursuant to the emergency service.

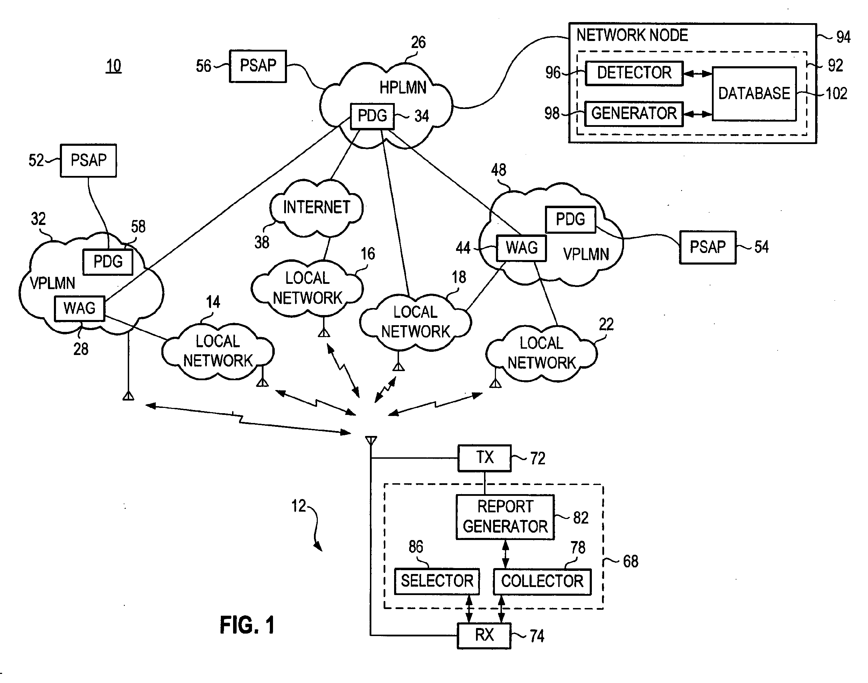

Turning first, therefore, to Figure 1, a radio communication system, shown generally at 10, provides for radio communications with wireless devices, here represented by a UE (User Equipment) 12. The UE 12 is a multi-mode device, capable here of both circuit-switched and packet-switched communications. More generally, the wireless device is representative of various radio transceivers that are capable at least of packet-switched communications with a network.

The communication system includes network infrastructure, here including multiple networks, including local networks 14, 16, 18, and 22. The local networks are representative, e.g., of WLANs (Wireless Local Area Networks), WiFi networks, and other IP (Internet Protocol), or other packet-switched networks. The wireless device 12 is positionable within the coverage areas of the networks 14-22 that, in the exemplary illustration of Figure 1, have at least partially overlapping coverage areas.

The local networks are connected in communication connectivity, directly or indirectly, with a cellular network that forms an HPLMN (Home Public Land Mobile Network) 26 that forms the home network of the wireless device 12. The exemplary implementation represents various of the possible interconnections and interworkings between the local networks and the HPLMN. The local network 14 is connected to wireless access gateway 28 of another cellular network, here identified as a VPLMN (Visited Public Land Mobile Network) 32. The wireless access gateway 28 is positioned in communication connectivity with a packet data gateway 34 of the home network 26. Conversely, the local network 16 is connected to a packet data network, here the internet 38. And, the packet data gateway of the home network 26 is positioned in communication connectivity with the internet. Communication connectivity is thereby provided between the wireless device 12 and the home network by way of a radio air interface, the local network 16, and the internet 38. The wireless device is also positionable in communication connectivity with the home network by way of a radio air interface, the local network 14, the VPLMN 32 and the packet data gateway of the home network.

The local network 18 is positioned in direct communication connectivity with the home network by way of a connection with the packet data gateway thereof. Additionally, the local network 18 is also indirectly connected to the home network by way of a wireless access gateway 44 of another VPLMN 48. The gateway 44 of the visited network 48 is positioned in direct communication connectivity with the packet data gateway of the home network. The home network 22 is positioned in communication connectivity with the wireless access gateway 44 of the visited network 48 and, thereby, in turn, with the home network 26. In the illustrated example, the wireless device is positioned at a location permitting its communication with any of the local networks 22 and with the cellular network 32. The network 32 is here representative of a network that provides both packet-switched and circuit-switched communications. And, due to the multi-mode capability of the wireless device, the wireless device is capable of forming a packet-switched connection with any of the networks 14-22 and 32 or a circuit-switched connection with the visited network 32.

The communication system 10 is shown further to include Public Safety Access Points (PSAPs) 52, 54, and 56. The PSAP 52 is connected to the visited network 32, such as by way of the Packet Data Gateway (PDG) 58 thereof. A problem might occur in the event that the wireless device attempts to place an emergency call over IMS (Internet Multimedia Service) to a PSAP. If the wireless device is positioned within its home geographical area (e.g. within the coverage area of the HPLMN), the call is placed to the PSAP 56 in whose vicinity that the wireless device is positioned. However, and as illustrated in the exemplary illustration of Figure 1, if the wireless device is positioned beyond the coverage area of the HPLMN and a call is placed over IMS, then the call is not routed to a most-local, i.e., appropriate PSAP, but instead is not likely to be delivered to the appropriate PSAP. To overcome this problem, an embodiment of the present invention provides a manner and mechanism by which to provide instruction to the wireless device to cause the wireless device to connect with an appropriate network to cause the emergency call to be connected to the appropriate PSAP. Apparatus 68 is embodied at the wireless device and coupled to the radio transceiver circuitry thereof, here represented by a transmit part (tx) 72 and a receive part (rx) 74. The apparatus is shown to be formed of functional entities, implementable in any desired manner, including by algorithms executable by processing circuitry. While functionally represented as separate functional entities, in an actual implementation, parts of the entities are, e.g., embodied at the transceiver circuitry or at a control element that controls operation of the transceiver circuitry. The apparatus is here shown to include a collector 78, a reporter 82, and a detector and selector 86 ("selector"). Additional apparatus 92 is further provided at a network node 94, here embodied at, or coupled to, the home network 26. Here, again, the entities of the apparatus are functionally represented, implementable in any desired manner, including algorithms executable by processing circuitry. The elements are here shown to include a detector/determiner 96 ("determiner"), a report response generator 98 and a data base 102.

In operation, the collector 78 operates to collect information of available Radio Access Types (RATs) with which the wireless device is able to communicate from the position in which the device is located. The collection of the information is made, e.g., by scanning frequencies of frequency bands over which the wireless device is operable or subset there of. For instance, the wireless device, if operable at the GERAN or UTRAN 700, 850, 900, 1800, 1900, 2100, etc. MHz frequency bands, such bands are scanned. And, if the wireless device is operable at frequency bands associated 802.11a, 802.11b, 802.11g, 802.11n, Wi-max, etc. frequency bands, then these bands are also scanned. A list is created of available networks, the list is stored within the wireless device and the list is provided to the reporter 82. The reporter operates to generate the available radio access types of networks available for communications. Such information collected that is within the list could include but is not limited to : information broadcast in broadcast messages, SSID, CGI etc

An end-to-end session, e.g., an SIP (Session Interface Protocol) session is initiated with functionality of the wireless device forming an SIP UA (User Agent). The SIP user agent initiates a session and sends a list of available access types in a message, such as an SIP invite message. The list is embodied in the exemplary implementation in an information element formed of a P-access-network-info header. The list contains one to many entries. In alternate implementations, the message is otherwise constructed, such as a USSD message that conveys analogous information, i.e., carries SIP type information per IMS centralized services capabilities. The message is routed to the home network and provided to the network node 94. The determiner 96 of the apparatus 92 is provided with the session initiation request sent by the SIP UA functionality of the wireless device. Depending upon the service requested in the message, e.g., R-URI analysis, analysis of the received message is selectably performed. If so, the determiner determines if there is a list of available access types included in the message. If the list is included, and a further determination is made as to whether the wireless device should use another access type pursuant to a communication session, here an emergency call. The data base 102 is accessed, and accessed information indicates the access type that should be utilized by the wireless device. The accessed information is provided to the response generator 98 that generates a response message, here, e.g., an SIP 380 message, includes the accessed information. The information is formatted, for instance, based on XML. The report response message is sent to the wireless device, received at the receive part thereof and provided to the selector 86 of the apparatus 68. The response message contains instructions on what the SIP UA functionality of the wireless device should do next. The instructions include, e.g., instructions for the SIP UA to choose an alternative domain, such as a circuit-switched domain or to choose a packet-switched domain and provide a list of access types that the SIP UA of the wireless device from which the user agent can choose. The list consists of zero to many elements, and the preference that the user agent should make selection. Preference is based either on the ordering of the elements of in the list, or e.g., a numerator is provided against each list element that gives the element a preference order. And, the selector commences to make selection of the access type. The information is used to make an emergency call, to perform session continuity, and to perform voice continuity, as appropriate.

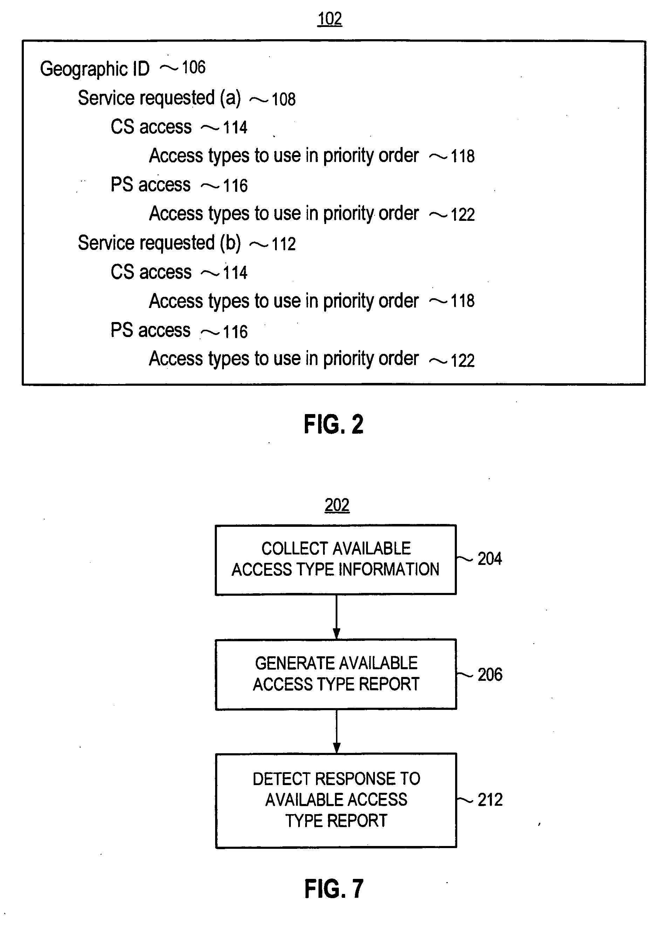

Figure 2 illustrates a representation of exemplary contents of the database 102 forming part of the apparatus 92 of the network node 94 (shown in Figure 1). The exemplary implementation here indexes information on a per country basis. Accordingly, with respect to a geographic location, indicated by the geographic ID 106, the requested service, here (a) 108 and (b) 112 are iterated for the particular geographic ID. For the requested services, circuit-switched and packet-switched access subdivisions 114 and 116 are identified. Within the designations 114 and 1 16, access types that are to be used are listed in priority order, indicated at 118 and 122, respectively.

The geographic ID is, for instance, represented in terms of GPS coordinates, CGI, or part thereof, airport codes, points of interest, country, county, or other appropriate designation.

In the event that the list is not contained in the SIP Invite message, the operation of the apparatus 92 at the network 94 is still able to make a determination if another access type should be used. The access information, formatted in XML, for instance, is returned back to the wireless device and contains a list of alternate access networks, domain types, access networks that should be selected against an access type, or any other action that should be taken, such as emergency registration, performance of voice continuity, performance of session continuity, etc. The additional information that is sent is dependent upon the requested service determined from, e.g., an R-URI or other appropriate SIP or other appropriate parameters.

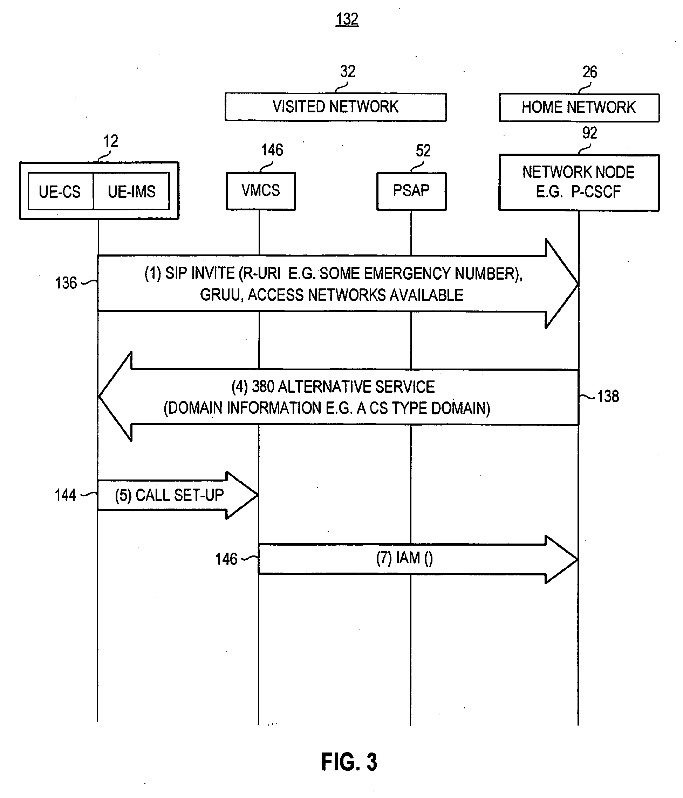

Figure 3 illustrates a message sequence diagram, shown generally at 132, representative of signaling generated during operation of an embodiment of the present invention, here implemented in the communication system 10, shown in Figure 1. Here, the UE formed of the device 12 is designated as a UE-CS and UE-IMS part. An SIP Invite message is generated and sent, indicated by the segment 136 and routed, by way of the visited network 32, to the home network 26 and the network node 92 thereof. The network node forms, e.g., a P-CSCF. The SIP Invite message includes an R-URI, e.g., an emergency number, a GRUU, and includes a listing of access networks that are available.

Operations performed at the network node identify whether an alternate access type or domain should be utilized by the wireless device. A response to the SIP Invite is returned, here an SIP 380 message 138. The SIP 380 message identifies the alternative service, e.g., domain information or specific network to be utilized.

When delivered to the user equipment, the user equipment makes selection of the access type that is subsequently to be used. Here, subsequent call set-up, indicated by the segment 144, is generated, here routed to a VMSC 146 of the visited network that, in turn, routes the call to the appropriate PSAP, here the PSAP 52.

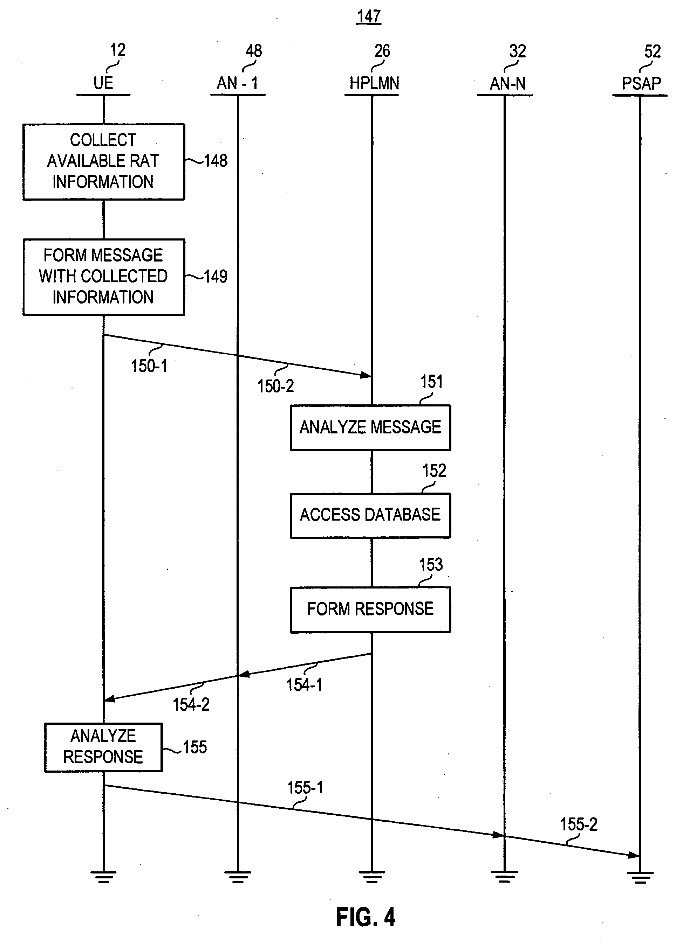

Figure 4 illustrates a message sequence diagram, shown generally at 147, also representative of signaling generated during operation of an embodiment of the present invention. The signaling diagram also describes exemplary operation with respect to the radio communication system 10, shown in Figure 1. And, accordingly, the UE 12, access networks 32 and 48, the home network 26, and a PSAP 52 are again identified.

At the device 12, information is collected, indicated by the block 148, of radio access types that are available to the wireless device. And, as indicated by the block 149, a message is formed with the collected information. The message is, e.g., an SIP Invite message. The message is sent, indicated by the segments 150-1 and 150-2 by way of an access network, here the visited network 48, for delivery to the home network 26 of the UE.

The message is analyzed, indicated by the block 151, and a database is accessed, indicated by the block 152. In the event that the wireless device should be communicating by way of a different access network, the database information provides information of an alternate access network that is to be used. A response message is formed, indicated by the block 153, and the response message is returned, indicated by segments 154-1 and 154-2 to the wireless device. Once delivered at the UE, the response is analyzed, indicated by the block 155, and subsequent signaling, indicated by the segments 155-1 and 155-2 are generated, routed by way of an access network, here the visited network 32, identified in the response message that, in turn, routes the signaling on to the PSAP 52.

In one proposal, emergency session setup is first described. The UE shall translate any user indicated emergency number to an emergency service URN, i.e. an URN with "sos" service type as specified in draft-ietf-ecrit-service-urn. In the event the UE receives a 380 (Alternative Service) response to an INVITE request the response containing a XML body that includes an <alternative service> element with the <type> child element set to "emergency", the UE shall automatically send an ACK request to the P-CSCF as per normal SIP procedures and terminate the session. The UE can attempt an emergency call setup in the CS domain according to the procedures described in 3GPP TS 24.008 [8].

Emergency numbers which the UE does not detect, will be treated as a normal call. In the event the UE receives a 380 (Alternative Service) response to an INVITE request, the response containing a XML body that includes an <alternative service> element with the <type> child element set to "emergency" and the <action> child element includes the <alternative-access-network> child element, which includes the <other> element, the UE shall automatically send an ACK request to the P-CSCF as per normal SIP procedures and terminate the session. The UE can attempt an emergency call setup in the CS domain according to the procedures described in 3GPP TS 24.008 [8] or can attempt an emergency call setup in the PS domain according to the procedures described in this clause and in 3GPP TS 23.167 [4B]. Emergency numbers which the UE does not detect, will be treated as a normal call.

In the event the UE receives a 380 (Alternative Service) response to an INVITE request, the response containing a XML body that includes an <alternative service> element with the <type> child element set to "emergency" and the <action> child element's content includes the <alternative-access-network> child element, which includes the <cs> and/or <ps> element(s), the UE shall automatically send an ACK request to the P-CSCF as per normal SIP procedures and terminate the session. The UE can attempt an emergency call setup in any CS domain according to the procedures described in 3GPP TS 24.008 [8] if the access technology listed in <cs> element's contents contains 'other' or can attempt an emergency call setup in the PS domain according to the procedures described in this clause and in 3GPP TS 23.167 [4B] if the access technology listed in <ps> element's contents contains 'other'. The UE can attempt an emergency call setup in any of the CS access technology listed in <cs> element's contents according to the procedures described in 3GPP TS 24.008 [8] or can attempt an emergency call setup in any of the PS access technology listed in <ps> element's contents according to the procedures described in this clause and in 3GPP TS 23.167 [4B]. Emergency numbers which the UE does not detect, will be treated as a normal call.

In an additional proposal emergency session set-up in case of no registration is described. When establishing an emergency session for an unregistered user, the UE shall be allowed to receive responses to emergency requests and requests inside an established emergency session on the unprotected ports. All other messages not arriving on a protected port shall be rejected or silently discarded by the UE. Prior to establishing an emergency session for an unregistered user, the UE shall acquire a local IP address, discover a P-CSCF, and establish an IP-CAN bearer that can be used for SIP signalling. The UE shall send only the initial INVITE requests to the port advertised to the UE during the P-CSCF discovery procedure. If the UE does not receive any specific port information during the P-CSCF discovery procedure, the UE shall send the initial INVITE request to the SIP default port values as specified in RFC 3261.

The UE shall apply the procedures as specified in subclause 5.1.2A. and subclause 5.1.3 with the following additions. The UE shall set the From header field of the INVITE request to "Anonymous" as specified in RFC 3261. The UE shall include a Request-URI in the initial INVITE request that contains an emergency service URN, i.e. with "sos" service type as specified in draft ietf-ecrit-service-urn. An additional sub-service type can be added if information on the type of emergency service is known. Other specifications make provision for emergency service identifiers, that are not specifically the emergency service URN, to be recognised in the UE. Emergency service identifiers which the UE does not detect will be treated as a normal call by the UE.

The UE shall insert in the INVITE request, a To header with: the same emergency service URN as in the Request URI; or if the UE cannot perform local dialstring interpretation for the dialled digits, a dialstring URI representing the dialed digits in accordance with draft-rosen-iptel-dialstring [103] or a tel URL representing the dialed digits. This version of this document does not provide any specified handling of a URI with the dialed digits in accordance with draft-rosen-iptel-dialstring at an entity within the IM CN susbsystem. Behaviour when this is used is therefore not defined. If available to the UE (as defined in the access technology specific annexes for each access technology), the UE shall include in the P-Access-Network-Info header in any request for a dialog, any subsequent request (except ACK requests and CANCEL requests) or response (except CANCEL responses) within a dialog or any request. The UE shall populate the P-Access-Network-Info header with the current point of attachment to the IP-CAN as specified for the access network technology. The P-Access-Network-Info header contains the location identifier such as the cell id, the line id or the identity of the I-WLAN access node, which is relevant for routeing the IMS emergency call. If available to the UE, the UE shall populate the access-type available element with all the known access types such as GERAN-PS, UTRAN-PS etc., e.g. if a wideband scan was performed. The scan includes, for instance, scans for available GERANS at the 700, 850, 900, 1800, 1900, 2100, etc. MHz frequency bands, for available UTRANS at the 700, 800, 900, 1800, 1900, 2100, etc. frequency bands, at the 802.11a, 802.11b, 802.11g, 802.11n, and Wi-max bands, as well as any of various other bands.

The UE shall populate the P-Preferred-Identity header in the INVITE request with an equipment identifier as a SIP URI. The special details of the equipment identifier to use depends on the IP-CAN A Contact header set to include SIP URI that contains in the hostpot parameter the IP address of the UE and an unprotected port where the UE will receive incoming requests belonging to this dialog. The UE shall not include either the public or temporary GRUU in the Contact header. A Via header set to include the IP address of the UE in the sent-by field and for the UDP the unprotected server port value where the UE will receive response to the emergency request, while for the TCP, the response is received on the TCP connection on which the emergency request was sent.

If the UE has its location information available, it shall include the location information in the INVITE request in the following way. If the UE is aware of the URI that points to where the UE's location is stored, include the URI in the Geolocation header in accordance with a draft-ietf-sip-location-conveyance. Or, if the geographical location information of the UE is available to the UE, include its geographical location information as PIDF location object in accordance with RFC 4119 and include the location object in a message body with the content type application/pidf+xml in accordance with a draft-ietf-sip-location-conveyance. The Geolocation header is set to a Content ID in accordance with a draft-ietf-sip-location-conveyance. And, if the UE has no geographical location information available, the UE shall not include any geographical location information as specified in draft-ietf-sip-location-conveyance [89] in the INVITE request. It is suggested that UE's only use the option of providing a URI when the domain part belongs to the current P-CSCF or S-CSCF provider. This is an issue on which the network operator needs to provide guidance to the end user. A URI that is only resolvable to the UE which is making the emergency call is not desirable. During the dialog, the points of attachment to the IP-CAN of the UE can change (e.g. UE connects to different cells). The UE will populate the P-Access-Network-Info header in any request or response within a dialog with the current point of attachment to the IP-CAN (e.g. the current cell information). The UE shall build a proper preloaded Route header value for all new dialogs. The UE shall build a Route header value containing only the P-CSCF URI (containing the unprotected port number and the IP address or the FQDN learnt through the P-CSCF discovery procedures).

In the event the UE receives a 380 (Alternative Service) response to an INVITE request containing a XML body that includes an <alternative service> element with the <type> child element set to "emergency" and the <action> child element containing a <emergency-registration> element, and the UE does not have sufficient credentials to authenticate with the IM CN subsystem, the UE shall not initiate an emergency registration. The UE can attempt an emergency call setup according to the procedures described in 3GPP TS 24.008 or otherwise in accordance with this description.

When a SIP transaction times out, i.e. timer B, timer F or timer H expires at the UE, the UE may behave as if timer F expired. It is an implementation option whether these actions are also triggered by other means. A number of headers can reveal information about the identity of the user. Where privacy is required, implementers should also give consideration to other headers that can reveal identity information. RFC 3261 [26] provides for the use of the Priority header field with a suggested value of "emergency". It is not precluded that emergency sessions contain this value, but such usage will have no impact on the processing within the IM CN subsystem.

In an additional proposal, emergency session set-up within an emergency registration is described. After a successful initial emergency registration, the UE shall apply the procedures described herein with the following additions. The UE shall include a Request URI in the INVITE request that contains an emergency service URN, i.e. with "sos" service type as specified in a draft-ietf ecrit-service-urn. An additional sub-service type can be added if information on the type of emergency service is known. The UE shall insert in the INVITE request, a To header with the same emergency service URN as in the Request URI; or if the UE cannot perform local dialstring interpretation for the dialed digits, a dialstring URI representing the dialed digits in accordance with a draft-rosen-iptel-dialstring or a tel URL representing the dialed digits. This version of this document does not provide any specified handling of a URI with the dialled digits in accordance with draft-rosen-iptel-dialstring at an entity within the IM CN subsystem. Behavior when this is used is therefore not defined. The UE shall insert in the INVITE request, a From header that includes the public user identity or the tel URI associated with the public user identity. The UE shall insert in the INVITE request, a P-Preferred-Identity header that includes the emergency public user identity or the tel URI associated with the emergency public user identity. If the UE has its location information available, it shall include it in the INVITE request in the following way. If the UE is aware of the URI that points to where the UE's location is stored, include the URI in the Geolocation header in accordance with a draft-ietf-sip-location-conveyance; or if the geographical location information of the UE is available to the UE, include its geographical location information as PIDF location object and include the location object in a message body with the content type application/pidf+xml in accordance with a draft-ietf-sip-location-conveyance. The Geolocation header is set to a Content ID in accordance with a draft-ietf-sip-location-conveyance. It is suggested that UE's only use the option of providing a URI when the domain part belongs to the current P-CSCF or S-CSCF provider. This is an issue on which the network operator needs to provide guidance to the end user. A URI that is only resolvable to the UE which is making the emergency call is not desirable. If the UE has no geographical location information available, the UE shall not include any geographical location information as specified in the draft-ietf-sip-location-conveyance in the INVITE request; and if available to the UE, the P-Access-Network-Info header shall contain a location identifier such as the cell id, line id or the identity of the I-WLAN access node, which is relevant for routing the IMS emergency call. If available to the UE, the UE shall populate the access-type available element with all the known access types if a wideband scan was performed. The IMS emergency specification in 3GPP TS 23.167 [4B] describes several methods how the UE can get its location information from the access network or from a server. RFC 3261 [26] provides for the use of the Priority header field with a suggested value of "emergency". It is not precluded that emergency sessions contain this value, but such usage will have no impact on the processing within the IM CN subsystem.

In a further proposal, emergency session setup within a non-emergency registration is described. TUE shall apply existing procedures with the following additions. The UE shall include a Request URI in the INVITE request that contains an emergency service URN, i.e. with "sos" service type as specified in a draft-ietf-ecrit-service-um. An additional sub-service type can be added if information on the type of emergency service is known. The UE shall insert in the INVITE request, a To header with the same emergency service URN as in the Request URI; or if the UE cannot perform local dialstring interpretation for the dialed digits, a dialstring URI representing the dialed digits in accordance with a draft-rosen-iptel-dialstring or a tel URL representing the dialled digits. This version does not provide any specified handling of a URI with the dialed digits in accordance with the draft-rosen-iptel-dialstring at an entity within the IM CN subsystem. The UE shall insert in the INVITE request, a From header that includes the public user identity or the tel URI associated with the public user identity. The UE shall insert in the INVITE request a P-Preferred-Identity that includes the public user identity or the tel URI associated with the public user identity.

If the UE has its location information available, it shall include it in the INVITE request in the following way. If the UE is aware of the URI that points to where the UE's location is stored, include the URI in the Geolocation header in accordance with a draft-ietf sip-location-conveyance [89]. Or; if the geographical location information of the UE is available to the UE, include its geographical location information as PIDF location object and include the location object in a message body with the content type application/pidf+xml in accordance with the draft- ietf-sip-location-conveyance. The Geolocation header is set to a Content ID in accordance with the draft-ietf sip-location-conveyance.

If available to the UE, the P-Access-Network-Info header shall contain a location identifier such as the cell id, line id or the identity of the I-WLAN access node, which is relevant for routeing the IMS emergency call. If available to the UE, the UE shall populate the access-type available element with all the known access types if a wideband scan was performed, and if the UE has no geographical location information available, the UE shall not include any geographical location information as specified in the draft-ietf-sip-location-conveyance in the INVITE request. It is suggested that UE's only use the option of providing a URI when the domain part belongs to the current P-CSCF or S-CSCF provider. This is an issue on which the network operator needs to provide guidance to the end user. A URI that is only resolvable to the UE which is making the emergency call is not desirable.

Upon receiving a 380 (Alternative Service) response to the INVITE request, with the 380 (Alternative Service) response include a IM CN subsystem XML body, with the <type> element set to "emergency" and the <action> element containing an <emergency-registration> element the UE shall perform an initial emergency registration and attempt an emergency call. The IMS emergency specification in 3GPP TS 23.167 [4B] describes several methods how the UE can get its location information from the access network or from a server. RFC 3261 [26] provides for the use of the Priority header field with a suggested value of "emergency". It is not precluded that emergency sessions contain this value, but such usage will have no impact on the processing within the IM CN subsystem. And, emergency session release provides for a nomal call release procedure.

Emergency service is further described. If the P-CSCF belongs to a network where the registration is not required to obtain emergency service, the P-CSCF shall accept any unprotected request on the IP address and port advertised to the UE during the P-CSCF discovery procedure. The P-CSCF shall also accept any unprotected request on the same IP address and the default port as specified in RFC 3261 [26]. The P-CSCF can handle emergency session and other requests from both a registered user as well as an unregistered user. Certain networks only allow emergency session from registered users. If only emergency setup from registered users is allowed, a request from an unregistered user is ignored since it is received outside of the security association. The P-CSCF shall not subscribe to the reg event package for any emergency public user identity. The P-CSCF shall store a configurable list of local emergency service identifiers, i.e. emergency numbers and the emergency service URN, which are valid for the operator to which the P-CSCF belongs to. In addition to that, the P-CSCF shall store a configurable list of roaming partners' emergency service identifiers. The emergency service URN are common to all networks, although subtypes may either not necessarily be in use, or a different set of subtypes is in use. The above requirements do not apply to subtypes of the emergency service URN.

Access technology specific procedures are described in each access technology specific annex to determine whether the initial request for a dialog or standalone transaction or an unknown method is destined for a PSAP. Depending on local operator policy, the P-CSCF has the capability to reject requests relating to specific methods in accordance with RFC 3261 [26], as an alternative to the functionality described above. A P-CSCF in the home PLMN able to determine that a UE is roaming shall respond to the UE that an emergency session attempt not originally detected by the UE shall be attempted in the visited PLMN via the CS or PS domain. A P-CSCF in the visited PLMN or a P-CSCF in the home PLMN able to determine that a UE is non-roaming shall respond to the UE that an emergency session attempt shall be reattempted via the CS domain if the PLMN either cannot or chooses not to support the emergency session via the PS domain.

A P-CSCF in the visited PLMN or a P-CSCF in the home PLMN able to determine that a UE is non-roaming may respond to the UE that an emergency session attempt not originally detected by the UE shall be reattempted via the PS domain if the PLMN either cannot or chooses not to support the emergency session via the CS domain. In the case when the UE provided a list of available access types the P-CSCF may respond with a preferred or list of preferred PS access types. A P-CSCF in the home PLMN able to determine that the UE is not roaming but is accessing the P-CSCF from geographical location that the home PLMN cannot access an appropriate PSAP (e.g. UE is accessing a home PLMN P-CSCF using direct IP access via an I-WLAN in another country) then the P-CSCF shall respond to the UE that an emergency session attempt not originally detected by the UE shall be reattempted via the CS or PS. In the case when the UE provided a list of available access types and the P-CSCF chose to respond with reattempt in the PS domain, the P-CSCF may respond with a preferred or list of preferred PS and/or CS access types. If no available access type list was provided then the P-CSCF would respond with PS domain with "choose an alternative access network". In all other cases, a P-CSCF in the visited PLMN or a P-CSCF in the home PLMN may respond to a UE that an emergency session attempt not originally detected by the UE shall be reattempted via the CS or PS domain - e.g. if the PLMN supports emergency sessions via the PS and CS domains.

The P-CSCF shall take the following information into account, if available, when making a determination if the UE is roaming or not. The xxxx parameter in the P-Access-Network Info header by analyzing the received country code with the known country code of the P-CSCF and the GPS co-ordinates of the UE. When the P-CSCF responds that the CS or PS domain may be used for an emergency call, the P-CSCF shall include in the 380 (Alternative Service) response a Content-Type header field with the value set to associated MIME type of the 3GPP 1MS XML body. The P-CSCF shall include in the 3GPP IMS XML body an <alternative-service> element, set to the parameters of the alternative service. And, the P-CSCF shall also include a <type> child element, set to "emergency" to indicate that it was an emergency call; and the <action> child element, with contents indicating that an emergency session should be attempted in the serving network using the CS or PS domain and/or identifying preferred access networks; and a <reason> child element, set to an operator configurable reason.

When the P-CSCF responds that the CS domain is to be used for emergency call the P-CSCF shall include in the 380 (Alternative Service) response a Content-Type header field with the value set to associated MIME type of the 3GPP IMS XML body. The P-CSCF shall include in the 3GPP IMS XML body an <alternative-service> element, set to the parameters of the alternative service, a <type> child element, set to "emergency" to indicate that it was an emergency call, and a <reason> child element, set to an operator configurable reason.

When the P-CSCF responds that the PS domain shall be used for an emergency call, the P-CSCF shall include in the 380 (Alternative Service) response a Content-Type header field with the value set to associated MIME type of the 3GPP IMS XML body. The P-CSCF shall include in the 3GPP IMS XML body an <alternative-service> element, set to the parameters of the alternative service, a <type> child element, set to "emergency" to indicate that it was an emergency call, and an <action> child element, with contents indicating that an emergency session should be attempted in the serving network using the PS domain and/or identifying preferred access networks, and a <reason> child element, set to an operator configurable reason.

The P-CSCF can handle emergency session establishment within a non-emergency registration. When the P-CSCF responds that an emergency registration is required the P-CSCF shall include in the 380 (Alternative Service) response a Content-Type header field with the value set to associated MIME type of the 3GPP IMS XML body. The P-CSCF shall include in the 3GPP IMS XML body an <alternative-service> element, set to the parameters of the alternative service, a <type> child element, set to "emergency" to indicate that it was an emergency call, and an <action> child element, containing a <emergency-registration> element to indicate that emergency registration is required, and a <reason> child element, set to an operator configurable reason. This response is only sent in case if the P-CSCF received an explicit indication from the UE that it is an emergency session, i.e. receive emergency service URN in the Request-URI. For all SIP transactions identified as relating to an emergency, the P-CSCF shall give priority over other transactions. This allows special treatment (e.g. with respect to filtering, higher priority, routing) of emergency sessions. The exact meaning of priority is not defined further in this document, but is left to national regulation and network configuration.

The P-Access-Network-Info, header is extended to include specific information relating to particular access technologies. The syntax of the P-Access-Network-Info header is described in RFC 3455 [52]. There are additional coding rules for this header depending on the type of IP-CAN, according to access technology specific descriptions. The following table describes the 3GPP-specific extended syntax of the P-Access-Network-Info header field defined in RFC 3455 [52].

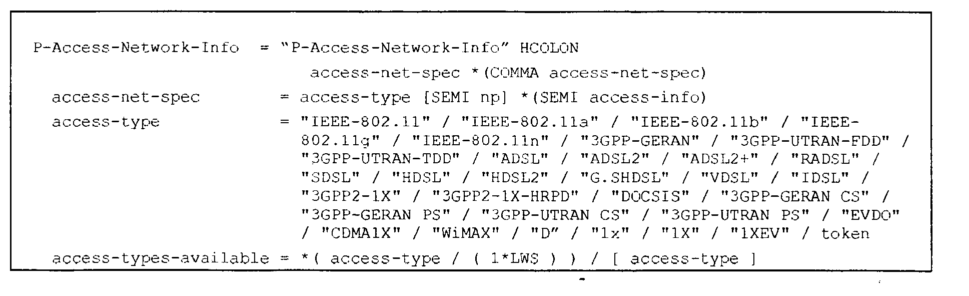

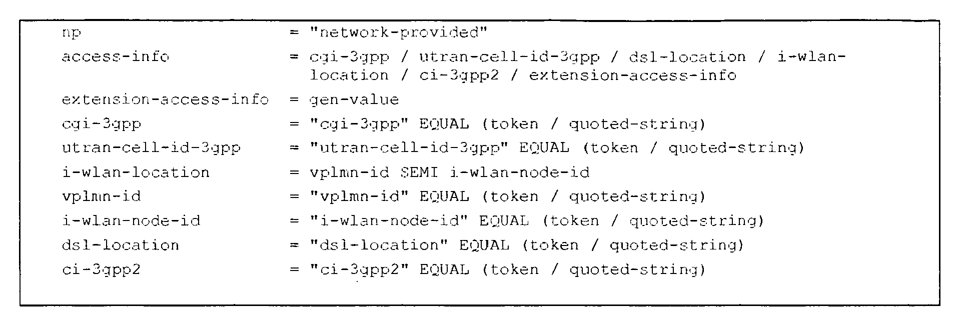

The P-Access-Network-Info header is extended to include specific information relating to particular access technologies. The syntax of the P-Access-Network-Info header is described in RFC 3455 [52]. There are additional coding rules for this header depending on the type of IP-CAN, according to access technology specific descriptions. The above table describes the 3GPP-specific extended syntax of the P-Access-Network-Info header field defined in RFC 3455 [52].

Additional coding rules are also provided for this header. The UE shall populate the P-Access-Network-Info header, where use is specified, with the following contents. The access-type field set to one of "3GPP-GERAN","3GPP-UTRAN-FDD", "3GPP-UTRAN-TDD", "3GPP2-1X", "3GPP2-1X-HRPD", "IEEE-802.11", "IEEE-802.11a", "IEEE-802.11b", "IEEE-802.11g", "ADSL", "ADSL2", "ADSL2+", "RADSL", "SDSL", "HDSL", "HDSL2", "G.SHDSL", "VDSL", "IDSL", "IEEE-80s.11n", "D", "1x", "1X", "1XEV", or "DOCSIS" as appropriate to the access technology in use.

If the access type field is set to "3GPP-GERAN", a cgi-3gpp parameter set to the Cell Global Identity obtained from lower layers of the UE. The Cell Global Identity is a concatenation of MCC, MNC, LAC and CI (as described in 3GPP TS 23.003 [3]). The value of "cgi-3gpp" parameter is therefore coded as a text string as follows. Starting with the most significant bit, MCC (3 digits), MNC (2 or 3 digits depending on MCC value), LAC (fixed length code of 16 bits using full hexadecimal representation) and CI (fixed length code of 16 bits using a full hexadecimal representation), if the access type field is equal to "3GPP-UTRAN-FDD", or "3GPP-UTRAN-TDD", a "utran-cell-id-3gpp" parameter set to a concatenation of the MCC, MNC, LAC (as described in 3GPP TS 23.003 [3]) and the UMTS Cell Identity (as described in 3GPP TS 25.331 [9A]), obtained from lower layers of the UE, and is coded as a text string as follows. Starting with the most significant bit, MCC (3 digits), MNC (2 or 3 digits depending on MCC value), LAC (fixed length code of 16 bits using full hexadecimal representation) and UMTS Cell Identity (fixed length code of 28 bits). If the access type field is set to "3GPP2-1X", a ci-3gpp2 parameter set to the ASCII representation of the hexadecimal value of the string obtained by the concatenation of SID (16 bits), NID (16 bits), PZID (8 bits) and BASE_ID (16 bits) (see 3GPP2 C.S0005-D [85]) in the specified order. The length of the ci-3gpp2 parameter shall be 14 hexadecimal characters. The hexadecimal characters (A through F) shall be coded using the uppercase ASCII characters. If the MS does not know the values for any of the above parameters, the MS shall use the value of 0 for that parameter. For example, if the SID is unknown, the MS shall represent the SID as 0x0000. The SID value is represented using 16 bits as supposed to 15 bits as specified in 3GPP2 C.SO005-D [85]. By way of an example, if SID = 0x1234, NID = 0x5678, PZID = 0x12, BASE_ID = 0xFFFF, the ci-3gpp2 value is set to the string "1234567812FFFF".

If the access type field is set to "3GPP2-1X-HRPD", a ci-3gpp2 parameter set to the ASCII representation of the hexadecimal value of the string obtained by the concatenation of Sector ID (128 bits) and Subnet length (8 bits) (see 3GPP2 C.S0024-A [86]) in the specified order. The length of the ci-3gpp2 parameter shall be 34 hexadecimal characters. The hexadecimal characters (A through F) shall be coded using the uppercase ASCII characters; By way of an example, if the Sector ID = 0x12341234123412341234123412341234, Subnet length = 0x11, the ci-3gpp2 value is set to the string "1234123412341234123412341234123411".

If the access-type field set to one of "IEEE-802.11", "IEEE-802.11a", "IEEE-802,11b" or "IEEE-802.11g", a vplmn-id parameter is set to a concatenation of the MCC and MNC (as described in 3GPP TS 23.003 [3]) and an "i-wlan-node-id" parameter is set to the MAC address of the AP.

If the access-type field is set to one of "ADSL", "ADSL2", "ADSL2+", "RADSL", "SDSL", "HDSL", "HDSL2", "G.SHDSL", "VDSL", "IDSL", the access-info field shall contain a dsl-location parameter obtained from the CLF (see NASS functional architecture). And, if the access-type field set to "DOCSIS", the access info parameter is set to a null value. This release of this specification does not define values for use in this parameter. The "cgi-3gpp", the "utran-cell-id-3gpp", the "ci-3gpp2", the "i-wlan-node-id:", and the "dsl-location" parameters described above among other usage also constitutes the location identifiers that are used for IMS emergency services.

If the UE has performed a wideband scan shall include the accee-type-available listing the access types that are available at the time of registration. If the P-CSCF receives an initial request for a dialog or standalone transaction or an unknown method and the request includes a P-Access-Network-Info header with a "network-provided" parameter the P-CSCF shall remove the P-Access-Network-Info header. The request is sent using xDSL as an IP-CAN the P-CSCF may insert a P-Access-Network-Info header into the request by setting the access-type field to one of "ADSL", "ADSL2", "ADSL2+", "RADSL", "SDSL", "HDSL", "HDSL2", "G.SHDSL", "VDSL", or "IDSL", adding the "network-provided" parameter and the "dsl-location" parameter with the value received in the Location-Information header in the User-Data Answer command as specified in ETSI ES 283 035 [98]. The way the P-CSCF deduces that the request comes using xDSL access is implementation dependent. The request is sent using DOCSIS as an IP-CAN the P-CSCF may insert a P-Access-Network-Info header into the request by setting the access-type field to "DOCSIS" and including the "network-provided" parameter. The way the P-CSCF deduces that the request comes using DOCSIS access is implementation dependent.

The 3GPP IM CN subsystem XML body of an embodiment of the present invention is shown in the following two Figures. The 3GPP IM CN Subsystem XML shall be valid against the 3GPP IM. CN Subsystem XML schema. Any SIP User Agent or proxy may insert or remove the 3GPP IM CN subsystem XML body or parts of it, as required, in any SIP message. The 3GPP IM CN subsystem XML body shall not be forwarded outside a 3GPP network. The associated MIME type with the 3GPP IMS XML body is "application/3gpp-ims+xml".

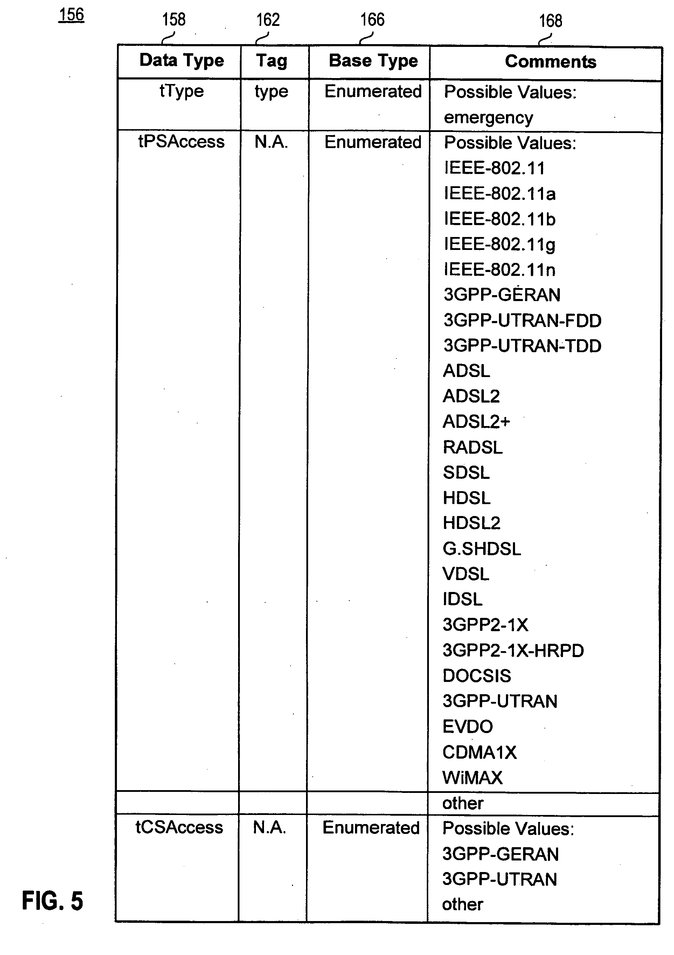

Figure 5 illustrates an exemplary XML schema used in the XML body of the SIP 380, or other, message generated in response to a report message, as described above. The XML schema is here for the 3GPP IM CN subsystem XML body that is sent by SIP user agents. The table 156 describes the data types and the dependencies amongst them that configure the 3GPP IM CN subsystem XML body schema. The table 156 includes a column 158 defining data types, a column 162 identifying tags associated with the data types, a column 166 listing base types, and a column 168 listing comments associated with the data types.

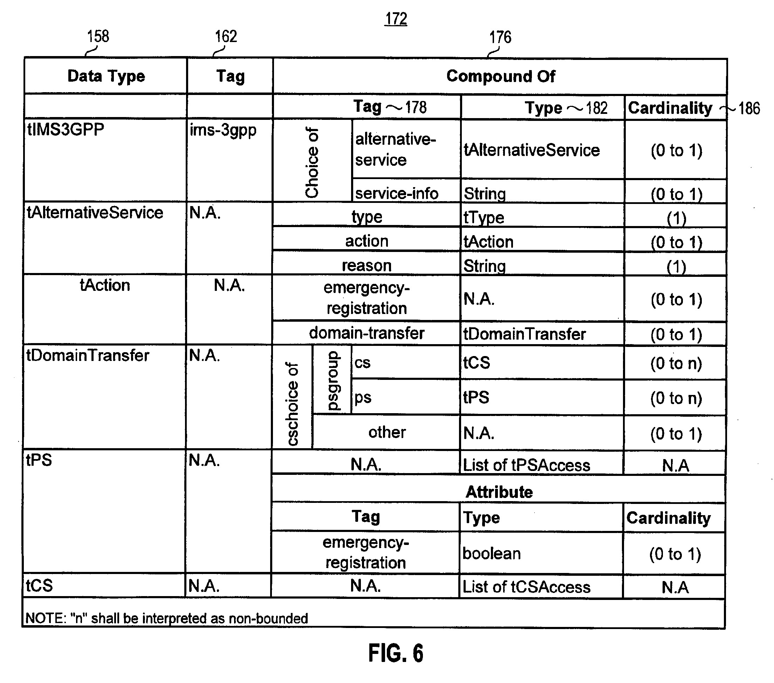

Figure 6 illustrates a table 172 that identifies also the XML schema for the XML body, here for complex data types. The columns 158 and 162 again list data types and tags associated therewith. Here, a column 176 is further provided. The column 176 forms a compound-of column with sub-columns 178, 182, and 186 that list tags, types, and cardinalities associated with the respective tags and data types.

Figure 7 illustrates a method flow diagram, shown generally at 202, representative of the method of operation of an embodiment of the present invention. The method is for facilitating performance of an emergency service by a packet-capable wireless device.

First, and as indicated by the block 204, available access type information of available access types, available to the wireless device, is collected.

Then, and as indicated by the block 206, an available access type report is generated that includes the available access type information that has been collected. And, as indicated by the block 212, a response to the available access type report is detected. The response identifies to the wireless device an emergency service access type to which to communicate pursuant to the emergency service.

Presently preferred embodiments of the invention and many of its improvements and advantages have been described with a degree of particularity. The description is of preferred examples of implementing the invention, and the description of preferred examples is not necessarily intended to limit the scope of the invention. The scope of the invention is defined by the following claims.

## Claims

1. An apparatus (12) for a packet-capable wireless communication device configured to receive service from a visited network node, said apparatus comprising:
a collector (78) configured to collect and store information of available radio access types with which the communication device is presently able to communicate;
a detector configured to detect a user-generated indication of an emergency;
an emergency session request message generator (82) configured to report said stored information in response to detection of said emergency indication detection;
a transmitter (72) configured to transmit said emergency session request to a home network node via the visited network node; and
a receiver (74) configured to receive an instruction from the home network node to utilize a specified radio access type for emergency communications in an attempt to initiate an emergency communication session with said specified radio access type.

2. The apparatus of claim 1 wherein said transmitter is configured to transmit a P-CSCF-terminated (Proxy Call Session Control Function-terminated) message.

3. The apparatus of claim 1 wherein said user-generated emergency indication is a dialed number and further comprising a translator adapted to translate a dialed number into an emergency service indicia.

4. The apparatus of claim 1 wherein said emergency session request further comprises an emergency service type.

5. The apparatus of claim 4 wherein said receiver is configured to receive a P-CSCF-originated message that identifies the access-type support of emergency service, the P-CSCF-originated message responsive to the available-access type report.

6. A method for facilitating an emergency service by a packet-capable communication device receiving service from a visited network node, said method comprising:
collecting and storing information of available radio access types with which the communication device is presently able to communicate;
detecting a user-generated indication of an emergency;
in response to said emergency indication detection, generating an emergency session request message reporting said stored information and transmitting said emergency session request message to a_home network node via the visited network;
receiving an instruction from the home network node to utilize a specified radio access type for emergency communications; and
attempting an emergency communication session with said specified radio access type.

7. The method of claim 6 wherein said generating comprises transmitting a P-CSCF-terminated message.

8. The method of claim 6 wherein said user-generated emergency indication is a dialed number, said method further comprising translating said dialed number into an emergency service indicia.

9. The method of claim 6 further comprising terminating a current communication service prior to the attempting an emergency communication session.

10. The method of claim 6 wherein the generating an emergency session request message further comprises the including an emergency service type in said emergency session request message.

11. The method of claim 9 wherein said receiving comprises receiving a PCSCF-originated message that identifies the access-type support of emergency service, the P-CSCF-originated message responsive to the available-access type report.

12. An apparatus (92) for a wireless network for facilitating a wireless-device emergency service for a wireless device receiving service from a visited network node, said apparatus comprising:
a determiner (96) at a home network node configured to detect an emergency session request message that reports information of available radio access types with which the wireless device is presently able to communicate generated by the wireless device in response to a user-generated indication of an emergency; and
a response generator (98) at the home network node configured to generate an instruction to the wireless device to utilize a specified radio access type for emergency communications in initiating an emergency communication session with said specified radio access type.

13. The apparatus of claim 12 wherein determiner is configured to detect a P-CSCF-terminated control message.

14. The apparatus of claim 12 wherein said emergency session request message further comprises an emergency service type.

15. The apparatus of claim 12 wherein said determiner is configured to delete an available access type report.

16. The apparatus of claim 15 wherein said determiner is configured to detect a P-CSCF-originated message that identifies the access-type support of emergency service.

17. A method for facilitating a wireless-device emergency service for a wireless device receiving service from a visited network node, said method comprising;
detecting at a home network node a wireless-device-generated emergency session request message generated by the wireless device in response to a user-generated indication of an emergency and that reports information of available radio access types with which the wireless device is presently able to communicate; and
generating at the home network node an instruction to the wireless device to utilize a specified radio access type for emergency communications in initiating an emergency communication session with said specified radio access type.

18. The method of claim 17 wherein said detecting comprises detecting a P-CSCF-terminated control message.

19. The method of claim 17 wherein said emergency session request message further comprises an emergency service type.

20. The method of claim 17 wherein said detecting further comprises detecting a P-CSCF-originated message that identifies access-type support service.

## Patentansprüche

1. Gerät (12) für eine paketfähige drahtlose Kommunikationsvorrichtung, die dazu konfiguriert ist, einen Dienst von einem besuchten Netzwerkknoten zu empfangen, wobei das Gerät Folgendes aufweist:
einen Sammler (78), der dazu konfiguriert ist, Information über verfügbare Funkzugriffstypen zu sammeln, mit denen die Kommunikationsvorrichtung gerade kommunizieren kann,
einen Detektor, der dazu konfiguriert ist, einen benutzererzeugten Hinweis auf einen Notfall zu detektieren,
einen Notfallsitzungsanfragenachricht-Erzeuger (82), der dazu konfiguriert ist, die gespeicherte Information als Reaktion auf Detektieren der Notfallhinweisdetektion zu berichten,
einen Sender (72), der dazu konfiguriert ist, die Notfallsitzungsanfrage an einen Heimnetzwerkknoten über den besuchten Netzwerkknoten zu übermitteln, und
einen Empfänger (74), der dazu konfiguriert ist, einen Befehl vom Heimnetzwerkknoten zu empfangen, einen spezifizierten Funkzugriffstyp für Notfallkommunikationen in einem Bestreben zu verwenden, eine Notfallkommunikationssitzung mit dem spezifizierten Funkzugriffstyp einzuleiten.

2. Gerät nach Anspruch 1, wobei der Sender dazu konfiguriert ist, eine P-CSCF-abgeschlossene (Proxy Call Session Control Function-terminated) Nachricht zu senden.

3. Gerät nach Anspruch 1, wobei der benutzererzeugte Notfallhinweis eine gewählte Nummer ist und ferner einen Übersetzer aufweist, der dazu ausgelegt ist, eine gewählte Nummer in ein Notfalldienstzeichen zu übertragen.

4. Gerät nach Anspruch 1, wobei die Notfallsitzungsanfrage ferner einen Notfalldiensttyp aufweist.

5. Gerät nach Anspruch 4, wobei der Empfänger dazu konfiguriert ist, eine P-CSCF-entstandene Nachricht zu empfangen, welche die Zugriffstypen-Unterstützung eines Notfalldienstes identifiziert, wobei die P-CSCF-entstandene Nachricht in Antwort auf den Verfügbarzugriffs-Typen-Bericht ist.

6. Verfahren zum Vereinfachen eines Notfalldienstes durch eine paketfähige Kommunikationsvorrichtung, die einen Dienst von einem besuchten Netzwerkknoten empfängt, wobei das Verfahren Folgendes aufweist:
Sammeln und Speichern von Information über verfügbare Funkzugriffstypen, mit denen die Kommunikationsvorrichtung gerade kommunizieren kann,
Detektieren eines benutzererzeugten Hinweises auf einen Notfall,
Erzeugen als Reaktion auf die Notfallhinweisdetektion einer Notfallsitzungsanfragenachricht, welche die gespeicherte Information berichtet, und Senden der Notfallsitzungsanfragenachricht an einen Heimnetzwerkknoten über das besuchte Netz,
Empfangen eines Befehls vom Heimnetzwerkknoten, einen spezifizierten Funkzugriffstyp für Notfallkommunikationen zu verwenden, und
Anstreben einer Notfallkommunikationssitzung mit dem spezifizierten Funkzugriffstyp.

7. Verfahren nach Anspruch 6, wobei das Erzeugen ein Senden einer P-CSCF-abgeschlossenen Nachricht aufweist.

8. Verfahren nach Anspruch 6, wobei der benutzererzeugte Notfallhinweis eine gewählte Nummer ist, wobei das Verfahren ferner Übersetzen der gewählten Nummer in ein Notfalldienstzeichen aufweist.

9. Verfahren nach Anspruch 6, das ferner Abschließen eines aktuellen Kommunikationsdienstes vor dem Anstreben einer Notfallkommunikationssitzung aufweist.

10. Verfahren nach Anspruch 6, wobei das Erzeugen einer Notfallsitzungsanfragenachricht ferner das Einschließen eines Notfalldiensttyps in der Notfallsitzungsanfragenachricht aufweist.

11. Verfahren nach Anspruch 9, wobei das Empfangen ein Empfangen einer PCSCF-entstandenen Nachricht aufweist, welche die Zugriffstypen-Unterstützung eines Notfalldienstes identifiziert, wobei die P-CSCF-entstandene Nachricht in Antwort auf den Verfügbarzugriffs-Typen-Bericht ist.

12. Gerät (92) für ein Drahtlosnetz zum Vereinfachen eines Drahtlosvorrichtungs-Notfalldienstes für eine drahtlose Vorrichtung, die einen Dienst von einem besuchten Netzwerkknoten empfängt, wobei das Gerät Folgendes aufweist:
einen Bestimmer (96) an einem Heimnetzwerkknoten, der dazu konfiguriert ist, eine Notfallsitzungsanfragenachricht zu detektieren, die Information über verfügbare Funkzugriffstypen berichtet, mit denen die drahtlose Vorrichtung gerade kommunizieren kann, und die von der drahtlosen Vorrichtung als Reaktion auf einen benutzererzeugten Hinweis auf einen Notfall erzeugt ist, und
einen Antworterzeuger (98) am Heimnetzwerkknoten, der dazu konfiguriert ist, einen Befehl an die drahtlose Vorrichtung zu erzeugen, einen spezifizierten Funkzugriffstyp für die Notfallkommunikationen bei Einleiten einer Notfallkommunikationssitzung mit dem spezifizierten Funkzugriffstyp zu verwenden.

13. Gerät nach Anspruch 12, wobei der Bestimmer konfiguriert ist, eine P-CSCF-abgeschlossene Steuernachricht zu detektieren.

14. Gerät nach Anspruch 12, wobei die Notfallsitzungsanfragenachricht ferner einen Notfalldiensttyp aufweist.

15. Gerät nach Anspruch 12, wobei der Bestimmer dazu konfiguriert ist, einen verfügbaren Zugriffstypenbericht zu löschen.

16. Gerät nach Anspruch 15, wobei der Bestimmer dazu konfiguriert ist, eine P-CSCF-entstandene Nachricht zu löschen, welche die Zugriffstypen-Unterstützung eines Notfalldienstes identifiziert.

17. Verfahren zum Vereinfachen eines Drahtlosvorrichtungs-Notfalldienstes für eine drahtlose Vorrichtung, die einen Dienst von einem besuchten Netzwerkknoten empfängt, wobei das Verfahren Folgendes aufweist:
Detektieren an einem Heimnetzwerkknoten einer von einer drahtlosen Vorrichtung erzeugten Notfallsitzungsanfragenachricht, welche von der drahtlosen Vorrichtung als Reaktion auf einen benutzererzeugten Hinweis auf einen Notfall erzeugt ist, und welche Information von verfügbaren Funkzugriffstypen berichtet, mit denen die drahtlose Vorrichtung gerade kommunizieren kann, und
Erzeugen am Heimnetzwerkknoten eines Befehls an die drahtlose Vorrichtung, einen spezifizierten Funkzugriffstyp für Notfallkommunikationen bei Einleiten einer Notfallkommunikationssitzung mit dem spezifizierten Funkzugriffstyp zu verwenden.

18. Verfahren nach Anspruch 17, wobei das Detektieren ein Detektieren einer P-CSCF-abgeschlossenen Steuernachricht aufweist.

19. Verfahren nach Anspruch 17, wobei die Notfallsitzungsanfragenachricht ferner einen Notfalldiensttyp aufweist.

20. Verfahren nach Anspruch 17, wobei das Detektieren ferner ein Detektieren einer P-CSCF-entstandenen Nachricht aufweist, die einen Zugriffstypen-Unterstützungs-Dienst identifiziert.

## Revendications

1. Appareil (12) destiné à un dispositif de communication sans fil capable de communiquer par paquets, configuré pour recevoir un service d'un noeud de réseau visité, ledit appareil comprenant :
un moyen de collecte (78) configuré pour recueillir et sauvegarder des informations sur des types d'accès radio disponibles avec lesquels le dispositif de communication est actuellement en mesure de communiquer ;
un détecteur, configuré pour détecter une indication d'urgence produite par l'utilisateur ;
un générateur de message de demande de session d'urgence (82), configuré pour fournir lesdites informations sauvegardées en réponse à la détection de ladite détection d'indication d'urgence ;
un émetteur (72) configuré pour émettre ladite demande de session d'urgence vers un noeud du réseau de rattachement, via le noeud de réseau visité ; et
un récepteur (74) configuré pour recevoir une instruction du noeud du réseau de rattachement, dans le but d'utiliser un type d'accès radio spécifié pour les communications d'urgence afin de tenter de lancer une session de communication d'urgence avec le type d'accès radio spécifié.

2. Appareil selon la revendication 1, dans lequel ledit émetteur est configuré pour émettre un message destiné à une fonction P-CSCF (Fonction mandataire de commande de la session d'appel).

3. Appareil selon la revendication 1, dans lequel l'indication d'urgence produite par l'utilisateur est un numéro composé et comprenant en outre un moyen de traduction conçu pour traduire un numéro composé en un marqueur de service d'urgence.

4. Appareil selon la revendication 1, dans lequel ladite demande de session d'urgence comprend en outre un type de service d'urgence.

5. Appareil selon la revendication 4, dans lequel ledit récepteur est configuré pour recevoir un message provenant d'une fonction P-CSCF qui identifie le type d'accès supporté par le service d'urgence, le message provenant de la fonction P-CSCF répondant au rapport sur les types d'accès disponibles.

6. Procédé destiné à faciliter un service d'urgence par un dispositif de communication sans fil capable de communiquer par paquets, recevant un service d'un noeud de réseau visité, ledit procédé comprenant les étapes consistant à :
recueillir et sauvegarder des informations sur des types d'accès radio disponibles avec lesquels le dispositif de communication est actuellement en mesure de communiquer ;
détecter une indication d'urgence produite par l'utilisateur ;
en réponse à ladite détection de l'indication d'urgence, produire un message de demande de session d'urgence qui rapporte lesdites informations sauvegardées et émettre ledit message de demande de session d'urgence à un noeud du réseau de rattachement, via le noeud de réseau visité ;
recevoir une instruction du noeud du réseau de rattachement, afin d'utiliser un type d'accès radio spécifié pour les communications d'urgence ; et
tenter d'établir une session de communication d'urgence avec ledit type d'accès radio spécifié.

7. Procédé selon la revendication 6, dans lequel ladite étape de production comprend l'émission d'un message destiné à une fonction P-CSCF.

8. Procédé selon la revendication 6, dans lequel ladite indication d'urgence produite par l'utilisateur est un numéro composé, ledit procédé comprenant en outre l'étape consistant à traduire ledit numéro composé en un marqueur de service d'urgence.

9. Procédé selon la revendication 6, comprenant en outre l'étape consistant à terminer un service de communication courant avant de tenter une session de communication d'urgence.

10. Procédé selon la revendication 6, dans lequel l'étape de production d'un message de demande de session d'urgence comprend en outre l'étape consistant à inclure un type de service d'urgence dans ledit message de demande de session d'urgence.

11. Procédé selon la revendication 9, dans lequel ladite étape de réception comprend l'étape consistant à recevoir un message provenant d'une fonction P-CSCF qui identifie les types d'accès supportés par le service d'urgence, le message provenant de la fonction P-CSCF répondant au rapport sur les types d'accès disponibles.

12. Appareil (92) destiné à un réseau sans fil, afin de faciliter un service d'urgence sans fil pour un dispositif sans fil recevant un service d'un noeud de réseau visité, ledit appareil comprenant :
un moyen de détermination (96) sur un noeud du réseau de rattachement, configuré pour détecter un message de demande de session d'urgence qui fournit des informations sur les types d'accès radio disponibles, grâce auxquels le dispositif sans fil est actuellement en mesure de communiquer, lesdites informations ayant été produites par le dispositif sans fil en réponse à une indication d'urgence produite par l'utilisateur ; et
un générateur de réponse (98) sur le noeud du réseau de rattachement, configuré pour produire une instruction adressée au dispositif sans fil afin qu'il utilise un type d'accès radio spécifié pour communications d'urgence dans le lancement d'une session de communication d'urgence avec ledit type d'accès radio spécifié.

13. Appareil selon la revendication 12, dans lequel le moyen de détermination est configuré pour détecter un message de commande destiné à une fonction P-CSCF.

14. Appareil selon la revendication 12, dans lequel ledit message de demande de session d'urgence comprend en outre un type de service d'urgence.

15. Appareil selon la revendication 12, dans lequel ledit moyen de détermination est configuré pour supprimer un rapport sur les types d'accès disponibles.

16. Appareil selon la revendication 15, dans lequel ledit moyen de détermination est configuré pour détecter un message provenant d'une fonction P-CSCF qui identifie les types d'accès supportés par le service d'urgence.

17. Procédé destiné à faciliter un service d'urgence pour dispositif sans fil, destiné à un dispositif sans fil qui reçoit un service d'un noeud de réseau visité, ledit procédé comprenant les étapes consistant à :
détecter sur un noeud du réseau de rattachement un message de demande de session d'urgence produit par un dispositif sans fil, qui a été produit par le dispositif sans fil en réponse à une indication d'urgence produite par l'utilisateur et qui contient des informations sur les types d'accès radio disponibles, avec lesquels le dispositif sans fil est actuellement en mesure de communiquer ; et
produire sur le noeud du réseau de rattachement une instruction destinée au dispositif sans fil, dans le but qu'il utilise un type d'accès radio spécifié pour les communications d'urgence afin d'établir une session de communication avec le type d'accès radio spécifié.

18. Procédé selon la revendication 17, dans lequel ladite étape de détection comprend l'étape consistant à détecter un message de commande destiné à une fonction P-CSCF.

19. Procédé selon la revendication 17, dans lequel ledit message de demande de session d'urgence comprend en outre un type de service d'urgence.

20. Procédé selon la revendication 17, dans lequel ladite étape de détection comprend en outre l'étape consistant à détecter un message provenant d'une fonction P-CSCF qui identifie les types d'accès supportés par le service.
